# EUROPÄISCHE PATENTANMELDUNG

(11) **EP 0 680 901 A1**
(43) Veröffentlichungstag der Anmeldung: **08.11.1995**
(21) Anmeldenummer: 95106703.2
(22) Anmeldetag: 04.05.1995
(51) Int. Cl.: B65G 47/90, B65B 21/12

(54) **Verfahren und Vorrichtung zum Umsetzen von Gegenständen**

(30) Priorität: 05.05.1994 DE 4415874
(71) Anmelder: Max Kettner Verpackungsmaschinenfabrik GmbH & Co KG, D-83026 Rosenheim (DE)
(72) Erfinder: Hanusch, Hans, D-83088 Kiefersfelden (DE)

(57) **Zusammenfassung**

Die Greifeinrichtung (4) hat schmale Greiforgane (5) und ein Druckelement (2), welches die gegriffenen Gegenstände (1) nach dem Öffnen der Greifvorrichtung (4) wieder aus der Greifvorrichtung (4) drückt, um so ein Verklemmen des gegriffenen Gegenstandes (1) in der Greifvorrichtung (4) zu verhindern, falls der gegriffene Gegenstand (1) seitlich abstehende Teile (3) im Greifbereich aufweist.

## Beschreibung

Die Erfindung betrifft ein Verfahren zum Umsetzen von Gegenständen gemäß Oberbegriff des Verfahrensanspruchs 1 sowie eine Vorrichtung zur Durchführung des Verfahrens gemäß dem Oberbegriff des Vorrichtungsanspruchs 6.

Ein derartiges Verfahren und eine entsprechende Vorrichtung ist beispielsweise aus der DE PS 2617976 bekannt.

Dort wird zum Umsetzen der Flasche die Flasche gegriffen, indem die Greiferglocke der Greifvorrichtung über den oberen Teil des Flaschenhalses gestülpt wird, bis ein in der Greifvorrichtung vorhandenes Druckstück auf der Mündung des Flaschenhalses aufsitzt. Anschließend werden mehrere in der Greiferglocke angebrachte Greiforgane radial nach innen zusammengedrückt und die Flasche wird dadurch gegriffen. Nach dem Umsetzen der Flasche werden die Greiforgane gelöst und die gesamte Greifvorrichtung wird von der Flasche gehoben. Die gesamte Greifvorrichtung ist an einem Halter federn gelagert, wodurch Höhendifferenzen ausgeglichen werden können.

Nachteilig bei dem Stand der Technik ist die Tatsache, daß beim Aufnehmen und Loslassen von Flaschen die mit einem Verschluß versehen sind, welcher sogenannte Sicherungslaschen aufweist Störungen auftreten können.

Unter Sicherungslaschen versteht der Fachmann an die Verschlußkappen von Flaschen angeformte Teile, welche beim Öffnen der Verschlußkappen teilweise abgerissen werden müssen und so eine Sicherung gegen versehentliches Öffnen des Verschlusses bilden. Eine unbeschädigte Sicherungslasche stellt gleichzeitig eine Kontrolle dar, ob die Flasche noch orginal verschlossen ist.

Bei bereits einmal geöffneten Verschlußkappen stehen die Sicherungslaschen dann seitlich ab. Der Einsatz von bekannten Greifvorrichtungen ist bei Flaschen, auf welchen sich bereits einmal geöffnete Verschlußkappen mit seitlich abstehenden Sicherungslaschen befinden nicht möglich, denn sowohl beim Greifen, als auch beim Loslassen können Störungen auftreten: Beim Greifen der Greifvorrichtung können die Flaschen umfallen, da die Greifvorrichtung an die Sicherungslaschen stößt, noch bevor die Flasche fest gegriffen ist.

Beim Absetzen der Flasche können sich ebenfalls Probleme ergeben, da sich die Sicherungslaschen in der Greifglocke verspreizen können und das Eigengewicht der Flasche nicht ausreicht, die Flasche von der Greifvorrichtung zu lösen und daher die Flasche in der Greifvorrichtung hängen bleiben kann.

Mehrwegflaschen treffen nach Durchlaufen eines Benutzungszyklus oftmals mit solchen Verschlußkappen beim Hersteller wieder ein. Für den störungsfreien automatisierten Verarbeitungsprozess ist es daher zwingend notwendig, daß das Umsetzen der zurückgelieferten Flaschen keine Probleme aufwirft, auch wenn diese Flaschen die oben genannten Verschlußkappen haben.

Es ist daher Aufgabe der Erfindung ein Verfahren anzugeben und eine Vorrichtung zu schaffen, wodurch die Nachteile des Standes der Technik vermieden werden und insbesondere ein sicheres Umsetzen von Flaschen mit seitlich abstehenden Sicherungslaschen ohne Störungen beim Greifen und Loslassen der Gegenstände gewährleistet ist.

Diese Aufgabe wird erfindungsgemäß gelöst durch die kennzeichnenden Merkmale des Verfahrensanspruchs 1 und des Vorrichtungsanspruches 6.

Die Erfindung geht dabei von der Erkenntnis aus, daß die radial seitlich abstehenden Sicherungslaschen beim Greifen nicht störend in Erscheinung treten, wenn die Greiforgane der Greifeinrichtung schmal ausgebildet und gleichmäßig um den Flaschenhals verteilt angeordnet sind und die Sicherungslaschen frei zwischen den dünnen Greiforganen abstehen können.

Auch beim Aufsetzen der Greifeinheit stellen die radial abstehenden Sicherungslaschen bei der vorliegenden Erfindung kein Hindernis für die schmalen Greiforgane dar, denn diese gleiten beim Vorgang des radialen Zusammendrückens der Greiforgane an den Sicherungslaschen ab.

In einer Weiterbildung der Erfindung ist es vorgesehen, daß die Gegenstände durch eine von der Gewichtskraft unabhängige Kraft, aus der Greifeinrichtung gedrückt werden. Dadurch wird auch ein Verspreizen der Sicherungslaschen in der Greifglocke unterbunden.

Die übrigen Unteransprüche sind Weiterbildungen der Erfindung oder besonders vorteilhafte Ausgestaltungsformen.

Nachfolgend wird eine mögliche Ausführungsform der Erfindung anhand der Bezugszeichenliste und der Zeichnungen näher erläutert.

Es zeigen:
- Fig.1-Fig.4: Das Aufsetzen des Greifers mit anschließendem Erfassen der Flasche in Seitenansicht,
- Fig.5a-Fig.5c: der aus den Fig.1 bis Fig.4 bekannte Vorgang in Draufsicht.
- Fig. 6: den Greifer als Einsatz in einer bekannten Packtulpe

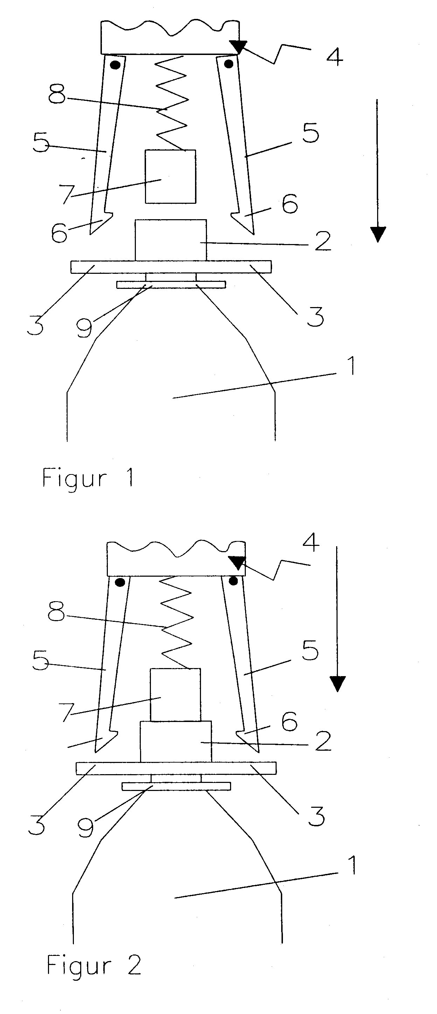

Die Figur 1 zeigt einen Teil einer Flasche 1, auf welcher ein Verschluß 2 sitzt. Die Flasche steht auf einer nicht näher gezeigten Standfläche. An dem Verschluß 2 befinden sich sogenannte Sicherungslaschen 3. Zum besseren Verständnis für das zu lösende technische Problem wird kurz auf die Funktion der Sicherungslaschen eingegangen: Die Sicherungslaschen sind bei einem noch ungeöffneten Verschluß über eine perforierte Aufreißlinie verbunden. Nach dem Aufreißen stehen die Sicherungslaschen 3 wie in der Figur 1 gezeigt seitlich ab und sind mit dem Verschluß 2 nur über eine dünne Materialbrücke ähnlich einem sogenannten Filmscharnier verbunden.

Oberhalb der Flasche 1 ist die Greifvorrichtung 4 angeordnet. Die eigentlichen Greiforgane 5 sind länglich und schlank ausgebildet und weisen im vorderen Bereich eine Haltenase 6 auf. Innerhalb des von den Greiforganen 5 umgebenen Bereichs befindet sich ein Andruckelement 7, das über eine Feder 8 mit der Greifvorrichtung 4 verbunden ist. Die vordere Fläche 7a des Andruckelementes 7 befindet sich im entspannten Zustand der Feder 8 etwa in der selben Ebene, in der die Haltenasen 6 der Greiforgane 5 liegen.

In der Figur 2 ist die erste Phase des Absenkens der Greifvorrichtung gezeigt. Die Fläche 7a des Andruckelements 7 berührt die Kappe 2 der Flasche 1 bevor die Greiforgane 5 in die Nähe der seitlich abstehenden Sicherungslaschen 3 geraten. Durch das Aufsetzen des Andruckelements 7 wird die Feder 8 gespannt und baut einen Anpressdruck auf die Flasche 1 in Richtung der Standfläche der Flasche 1 auf. Die Flasche 1 wird hierdurch zwische Standfläche und Andruckelement 7 eingespannt und gegen ein Umfallen stabilisiert. Dies ist besonders vorteilhaft bei leichten Kunststofflaschen.

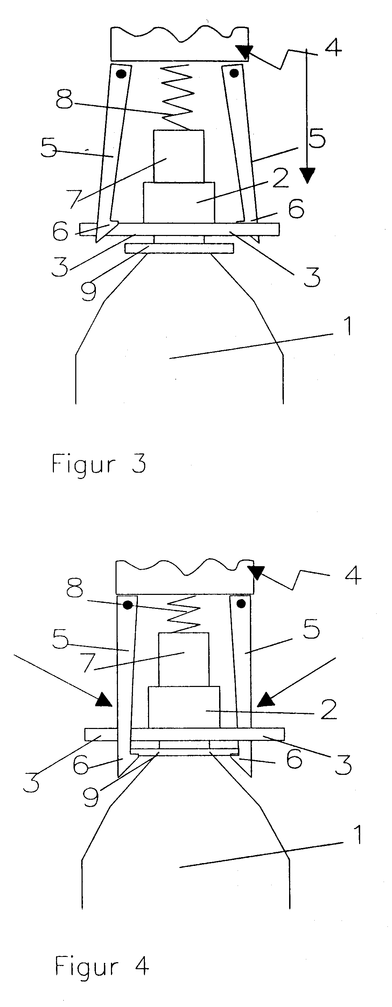

Figur 3 zeigt das weitere Aufsetzen der Greifvorrichtung 4 auf die Flasche. Die Greiforgane 5 sind sehr schmal ausgeführt und daher ist die Wahrscheinlichkeit, daß die Greiforgane 5 beim Aufsetzen der Greifvorrichtung 4 die Sicherungslaschen 3 berühren schon konstruktionsbedingt gering. Aber selbst wenn die Lage der Sicherungslaschen 3 zufälligerweise so sein sollte, daß die Sicherungslaschen den Greiforganen 5 beim Aufsetzen im Wege sind, gibt es keine Störungen, denn die Greiforgane 5 drücken die Sicherungslaschen 3 beiseite. Hier zeigt sich ein weiterer Vorteil des Andruckelements 7: Die beim Beiseitedrücken der Sicherungslaschen 3 auftretenden seitlich auf die Flasche 1 einwirkenden Kräfte werden durch das Andruckelement 7 abgefangen und ein Umfallen der Flasche 1 ist vorteilhaft verhindert.

Die Figur 4 zeigt die gegriffene Flasche 1. Die Greiforgane 5 befinden sich in der geschlossenen Stellung. Aus Gründen der Übersichtlichkeit wurde auf die detaillierte Darstellung von Betätigungsmechanik und Rückstellmechanik verzichtet. Die Haltenasen 6 an den Greiforganen 5 sitzen unterhalb des am Flaschenhals befindlichen Randes 5 und es ergibt sich so ein sicherer Formschluß. Das Andruckelement 7 wird durch die Federkraft der Feder 8 auf den Verschluß 2 gedrückt. Eine eventuell beim Umsetzen der Flasche 1 auftretende Pendelbewegung wird so vorteilhaft vermieden oder zumindest stark gedämpft.

Nach dem Absetzen der Flasche und dem Öffnen der Greiforgane 5 erfüllt das Andruckelement 7 erneut eine stabilisierende Funktion: Beim Öffnen der Greiforgane 5 können die Sicherungslaschen 3 den Greiforganen 5 störend im Weg sein und es können so erneut seitliche Kräfte auftreten welche durch das Andruckelement 7 aufgefangen werden. Diese stabilisierende Wirkung hält an, bis die Greifvorrichtung völlig abgehoben hat.

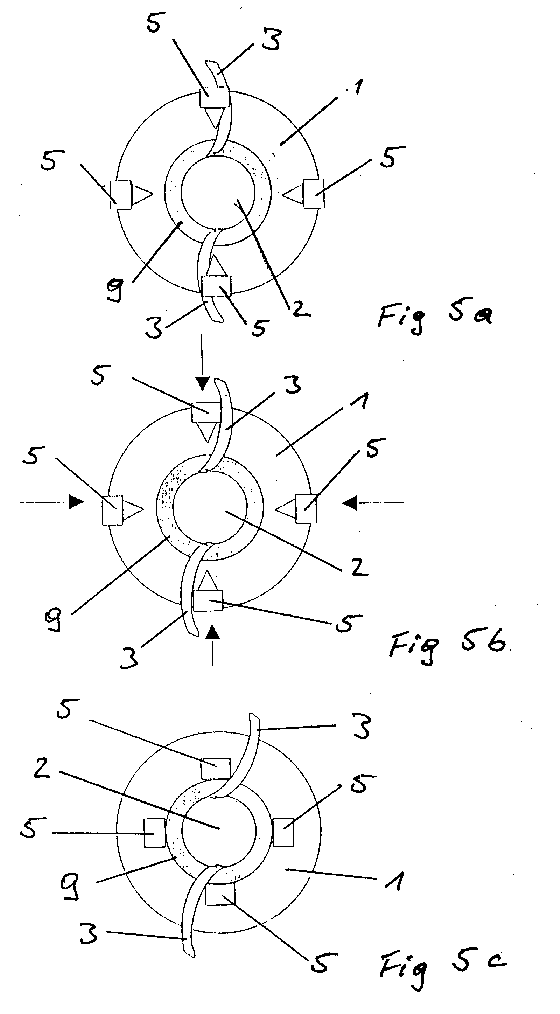

Die Figur 5, unterteilt in die Teile a, b, c zeigt in Draufsicht das Aufsetzen der Greifvorrichtung 4 auf den Verschluß 2. Die Teilfigur 5b zeigt die aufgesetzte Greifvorrichtung 4. Man erkennt das seitliche Ausweichen der Sicherungslaschen 3 an den Greiforganen 5. Nach dem völligen Aufsetzen der Greifvorrichtung 4 werden die Greiforgane 5 radial nach innen bewegt.

In der Teilfigur 5c ist die Greifvorrichtung 4 mit geschlossenen Greiforganen 5 dargestellt. Die Haltenasen 6 sind unter dem Rand 9 der Flasche 1 und sorgen für eine hohe Haltekraft aufgrund von Formschluß.

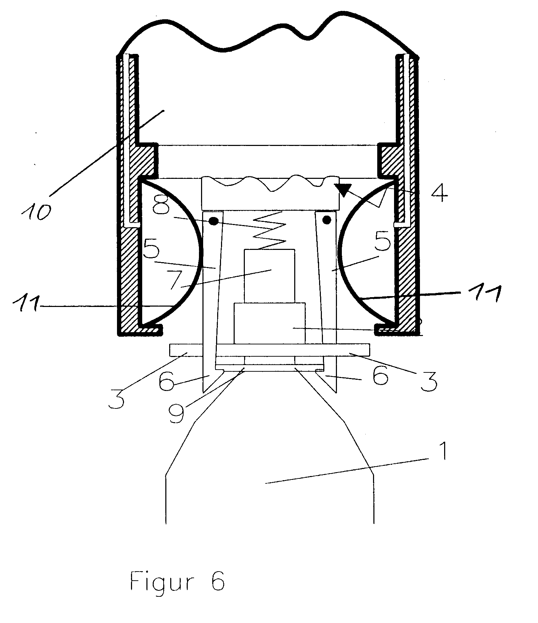

Prinzipiell ist jede Art der Betätigung möglich, auf einen besonders vorteilhaften Anwendungsbereich, dargestellt in der Figur 6, sei dennoch explizit hingewiesen: Man kann die Greifvorrichtung 4 insgesamt in eine vorhandene pneumatisch betätigte Packtulpe 10 nachträglich einsetzen. Die gezeigte Packtulpe 10 weist elastische Manschetten 11 auf, die unter Drucklufteinwirkung nach innen gewölbt werden und bei normaler Anwendung die Flaschen greifen. Bei der hier gezeigten Verwendung betätigen die Manschetten 11 die Greiforgane 5.

Diese spezielle Ausführungsform ist besonders vorteilhaft, wenn eine bestehende Vorrichtung zum Greifen von Flaschen umgerüstet werden soll auf die Verarbeitung von Flaschen mit einem Verschluß, der seitlich abstehende Sicherungslaschen aufweist.

Im übrigen beschränkte sich die Zeichnung auf die prinzipielle Darstellung der Erfindung, an sich bekannte Details z.B. wie die Greifvorrichtung 4 bewegt wird oder wie die Greiforgane 5 alternativ zu der in Figur 6 beschriebenen Weise betätigt werden können, sind -auch aus Gründen der Übersichtlichkeitnicht gezeigt.

### Bezugszeichenliste

- 1: Flasche
- 2: Verschluß
- 3: Sicherungslasche
- 4: Greifvorrichtung
- 5: Greiforgan
- 6: Haltenase
- 7: Andruckelement
- 8: Feder
- 9: Rand
- 10: Packtulpe
- 11: Manschette

## Patentansprüche

1. Verfahren zum Umsetzen von mindestens einem Gegenstand, wobei
- für jeden Gegenstand eine Greifeinheit verwendet wird, die mehrere Greifelemente zum Greifen des Gegenstandes aufweist,
- die einzelnen Greifelemente mit im wesentlichen gleichmäßigen Abständen zueinander um eine Öffnung verteilt angeordnet sind,
- die Greifelemente beim Greifen des Gegenstandes radial nach innen in Richtung der Kreismitte bewegt werden und
- nach Absetzen des Gegenstandes die Greifelemente wieder geöffnet und die Greifeinheit wieder angehoben wird
**dadurch gekennzeichnet, daß**
- der umzusetzende Gegenstand durch schmale Greifelemente (5) ergriffen wird,
- nach dem Absetzen des Gegenstandes (1) auf einer Standfläche und Öffnen der Greifelemente (5) durch ein Druckstück (7) eine Kraft auf den umzusetzenden Gegenstand (1) ausgeübt wird, und
- durch diese Kraft der umzusetzende Gegenstand (1) aus der Greifeinheit (4) in Richtung Standfläche gedrückt wird.

2. Verfahren nach Anspruch 1
**dadurch gekennzeichnet, daß**
- durch das Druckstück (7) bereits während des Aufsetzens der Greifeinheit (4) auf den umzusetzenden Gegenstand (1) eine Kraft auf den umzusetzenden Gegenstand (1) ausgeübt wird.

3. Verfahren nach Anspruch 1
**dadurch gekennzeichnet, daß**
- beim Greifvorgang die Greifeinheit (4) in Richtung des umzusetzenden Gegenstandes (1) bewegt wird, wobei zunächst das Druckstück (7) mit dem umzusetzenden Gegenstand (1) in Kontakt kommt und so der umzusetzende Gegenstand (1) zwischen Standfläche und Druckstück (7) eingeklemmt und gegen Umfallen gesichert wird,
- die Greifeinheit (4) weiter in Richtung des umzusetzenden Gegenstandes (1) bewegt wird, bis sich der umzusetzende Gegenstand (1) im Fassungsbereich der Greifelemente (5) befindet
- anschließend der umzusetzende Gegenstand (1) durch Schließen der Greiforgane (5) erfaßt und umgesetzt wird,
- nach dem Absetzen des umzusetzenden Gegenstandes (1) die Greiforgane (5) geöffnet werden und
- der umzusetzende Gegenstand (1) während des Anhebens der Greifeinheit (4) zwischen der Standfläche und dem Druckstück (7) eingeklemmt und gegen Umfallen gesichert wird,

4. Verfahren nach einem der Ansprüche 1 bis 3
**dadurch gekennzeichnet, daß**
durch den Druck, den das Druckstück (7) während des Aufsetzens und Abhebens der Greifeinheit (4) auf den Gegenstand (1) ausübt der Gegenstand zwischen der Standfläche und dem Druckstück (7) eingespannt und/oder gegen Umfallen gesichert wird.

5. Verfahren nach einem der Ansprüche 1 bis 3
**dadurch gekennzeichnet, daß**
der Druck, den das Druckstück (7) auf den Gegenstand (1) ausübt durch eine Feder (8) oder durch ein pneumatisch oder elektrisch angetriebenes Element erzeugt wird.

6. Vorrichtung zum Umsetzen von mindestens einem Gegenstand, wobei
- für jeden Gegenstand eine Greifeinheit vorgesehen ist, die mehrere Greifelemente zum Greifen des Gegenstandes aufweist,
- die einzelnen Greifelemente mit im wesentlichen gleichmäßigen Abständen zueinander um eine Öffnung verteilt angeordnet sind,
- die Greifelemente zwischen einer offenen Stellung und einer geschlossenen Stellung bewegbar sind, wobei in der geschlossenen Stellung die Greifelemente mit einer radial nach innen gerichteten Kraft auf den Gegenstand wirken und
- nach Absetzen des Gegenstandes die Greifelemente wieder lösbar und die Greifeinheit wieder anhebbar ist
**dadurch gekennzeichnet, daß**
- die Greifelemente (5) schmal ausgebildet sind und
- die Greifeinheit (4) zwischen den Greifelementen (5) Freiräume aufweist.

7. Vorrichtung nach Anspruch 6
**dadurch gekennzeichnet, daß**
- die Greifeinheit ein Druckstück (7) aufweist, welches eine Kraft auf den umzusetzenden Gegenstand (1) ausübt,
- die durch das Druckstück (7) ausgeübte Kraft von der Innenseite der Greifeinheit (4) aus in Richtung der Öffnung der Greifeinheit (4) gerichtet ist und
- durch diese Kraft der Gegenstand (1) aus der Greifeinheit (4) ausstoßbar ist.

8. Vorrichtung nach Anspruch 7
**dadurch gekennzeichnet, daß**
- eine Feder (8) als Verbindung zwischen Greifeinheit (4) und Druckstück (7) angeordnet ist.

9. Vorrichtung nach Anspruch 7
**dadurch gekennzeichnet, daß**
- das Druckstück (7) über einen Aktor mit der Greifeinheit (4) verbunden ist und
- durch den Aktor das Druckstück (7) relativ zur Greifeinheit (4) bewegbar ist.
